# EUROPEAN PATENT APPLICATION

(11) **EP 4 317 059 A1**
(43) Date of publication of application: **07.02.2024**
(21) Application number: 22780682.5
(22) Date of filing: 28.03.2022
(51) Int. Cl.: C01B 25/14, H01M 4/62, H01B 1/06, H01M 6/18, H01M 10/0562

(54) **SOLID ELECTROLYTE**

(30) Priority: 31.03.2021 JP 2021059501
(71) Applicant: Mitsui Mining & Smelting Co., Ltd., Shinagawa-ku Tokyo 141-8584 (JP)
(72) Inventor: NAKAYAMA, Yuki, Ageo-shi, Saitama 362-0021 (JP); TAKAHASHI, Tsukasa, Ageo-shi, Saitama 362-0021 (JP)
(74) Representative: Novagraaf Technologies
(86) International application number: PCT/JP2022/014816
(87) International publication number: WO 2022/210471

(57) **Abstract**

A solid electrolyte contains Li, P, S, halogen, and M elements (M represents at least one of silicon (Si), tin (Sn), antimony (Sb), germanium (Ge), and boron (B)), and has a crystalline phase with an argyrodite-type crystal structure. A molar ratio S/(P+M) of the S to the total of the P and M elements satisfies 3.5 < S/(P+M) < 4.2. A molar ratio M/P of the M element to the P satisfies 0 < M/P < 1. A molar ratio X/(P+M) of the halogen (X) element to the total of the P and M elements satisfies 0.7 < X/(P+M) < 3.0.

## Description

### Technical Field

The present invention relates to a solid electrolyte. The present invention also relates to an electrode material mixture, a solid electrolyte layer, and a battery containing the solid electrolyte.

### Background Art

In recent years, solid electrolytes have been attracting attention as a substitute for the electrolyte used in many liquid batteries. Solid-state batteries using solid electrolytes are expected to be put into practical use as batteries that are safer and have a higher energy density compared with liquid batteries using flammable organic solvents. For example, sulfide solid electrolytes containing a lithium (Li) element, a phosphorus (P) element, a sulfur (S) element, and a halogen element have been proposed as solid electrolytes (Patent Literatures 1 and 2).

### Citation List

### Patent Literature

Patent Literature 1: US 2016/156064A1
Patent Literature 2: WO 2020/095937A1

### Summary of Invention

Incidentally, since sulfide solid electrolytes are sulfur-containing materials, sulfur may react with moisture and generate hydrogen sulfide in some environments. Therefore, there is a desire to reduce the ratio of sulfur in the solid electrolyte. Patent Literatures 1 and 2 describe Li₅PS₄Cl₂ and Li₅PS₄ClBr as sulfide solid electrolytes with a relatively low sulfur ratio. Patent Literature 1 describes that Li₅PS₄Cl₂ has no ion conductivity. Li₅PS₄ClBr has ion conductivity, but the degree thereof cannot be said to be sufficient.

Therefore, it is an object of the present invention to provide a solid electrolyte with a predetermined composition and high ion conductivity.

The present invention provides a solid electrolyte including a lithium (Li) element, a phosphorus (P) element, a sulfur (S) element, a halogen (X) element, and an M element (M represents at least one of silicon (Si), tin (Sn), antimony (Sb), germanium (Ge), and boron (B)),
wherein a molar ratio S/(P+M) of the sulfur (S) element to a total of the phosphorus (P) element and the M element satisfies 3.5 < S/(P+M) < 4.2,
a molar ratio M/P of the M element to the phosphorus (P) element satisfies 0 < M/P < 1, and
the solid electrolyte has a crystalline phase with an argyrodite-type crystal structure.

### Brief Description of Drawings

[Fig. 1] Fig. 1 shows a high-temperature X-ray diffraction chart of a solid electrolyte.
[Fig. 2] Fig. 2 is a graph showing a relationship between a different phase A and a different phase B contained in a solid electrolyte and a molar ratio M/P.
[Fig. 3] Fig. 3 is an X-ray diffraction chart of solid electrolytes obtained in Examples 1 to 3 and Comparative Examples 1 and 2.
[Fig. 4] Fig. 4 is a graph showing a charge-discharge behavior of an all-solid-state battery produced using a solid electrolyte obtained in Example 2.

### Description of Embodiments

Hereinafter, the present invention will be described based on preferred embodiments thereof. A solid electrolyte of the present invention is a crystalline compound. A crystalline compound is a substance in which a diffraction peak attributed to a crystalline phase is observed when measured by an X-ray diffractometer (XRD). In particular, the solid electrolyte preferably has a crystalline phase with an argyrodite-type crystal structure, in order to enhance the lithium ion conductivity of the solid electrolyte.

An argyrodite-type crystal structure refers to a crystal structure possessed by a group of compounds derived from a mineral represented by the chemical formula Ag₈GeS₆. Whether or not a solid electrolyte has a crystalline phase with an argyrodite-type crystal structure can be determined through measurement using an XRD or the like. For example, in a diffraction pattern measured by an X-ray diffractometer using CuKα1 radiation, a solid electrolyte having a crystalline phase with an argyrodite-type crystal structure exhibits characteristic diffraction peaks at 2θ = 15.3°±1.0°, 17.7°±1.0°, 25.2°±1.0°, 30.0°±1.0°, 30.9°±1.0°, and 44.3°±1.0°. The solid electrolyte may further exhibit characteristic diffraction peaks at 2θ = 47.2°±1.0°, 51.7°±1.0°, 58.3°±1.0°, 60.7°±1.0°, 61.5°±1.0°, 70.4°±1.0°, and 72.6°±1.0°, in addition to the above-mentioned diffraction peaks, depending on the type of elements constituting the solid electrolyte. Data of PDF No. 00-034-0688 can be used to identify diffraction peaks attributed to an argyrodite-type crystal structure.

Crystalline solid electrolytes containing a lithium (Li) element, a phosphorus (P) element, a sulfur (S) element, and a halogen (X) element are known from Patent Literature 1 mentioned above, for example. The solid electrolyte described in this literature has the composition Li₅PS₄Cl₂. Therefore, this solid electrolyte has a lower ratio of sulfur elements compared with Li₆PS₅Cl, which is a solid electrolyte having a crystalline phase with an argyrodite-type crystal structure. A low ratio of sulfur elements contained in the solid electrolyte is preferable from the viewpoint of reducing the reaction between the sulfur element and moisture, thereby suppressing the generation of hydrogen sulfide. From this point of view, it is advantageous to use solid electrolytes with the composition Li₅PS₄Cl₂. However, solid electrolytes with the composition Li₅PS₄Cl₂ have lower lithium ion conductivity than solid electrolytes with the composition Li₆PS₅Cl. Therefore, the inventor of the present invention conducted intensive studies into improving the lithium ion conductivity of solid electrolytes having a crystalline phase with an argyrodite-type crystal structure and a low ratio of the S element. Consequently, it was found that the lithium ion conductivity of a solid electrolyte containing an Li element, a P element, a S element, and a X element can be improved by substituting part of the P element with another element.

The present invention is based on the aforementioned findings, and the solid electrolyte of the present invention contains an Li element, a P element, a S element, a X element, and an M element. M represents at least one of silicon (Si), tin (Sn), antimony (Sb), germanium (Ge), and boron (B). The M element is used for the purpose of substituting for the P element. Sn, Sb, Ge, and B have chemical commonality in that they can form units similar to PS₄³⁻ units in argyrodite-type crystal structures.

The above-mentioned M elements may be used alone or in a combination of two or more. The M element is preferably at least one of Si, Sb, and Sn from the viewpoint of further enhancing the lithium ion conductivity of the solid electrolyte, and more preferably at least Si from this point of view.

The inventor of the present invention believes that the reason as to why the lithium ion conductivity of the solid electrolyte can be improved by substituting part of the P element with another element is as follows.

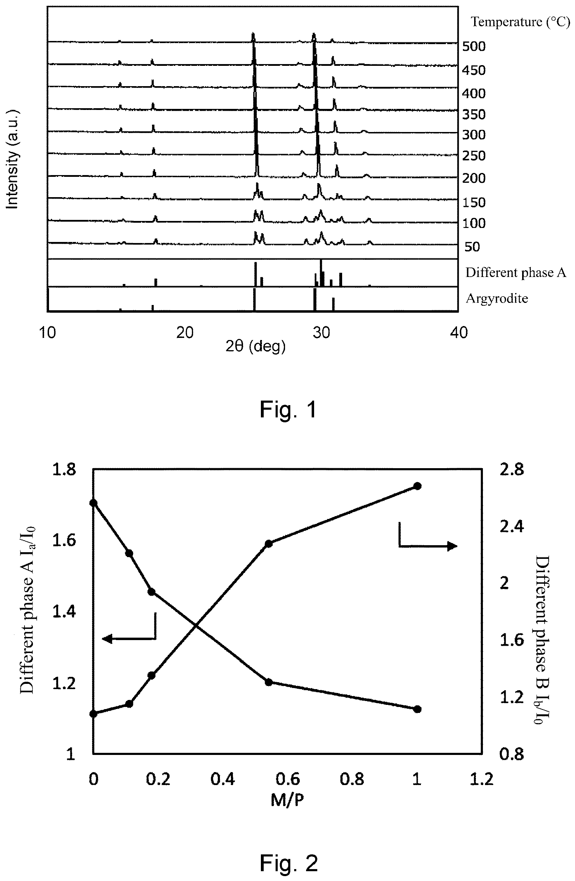

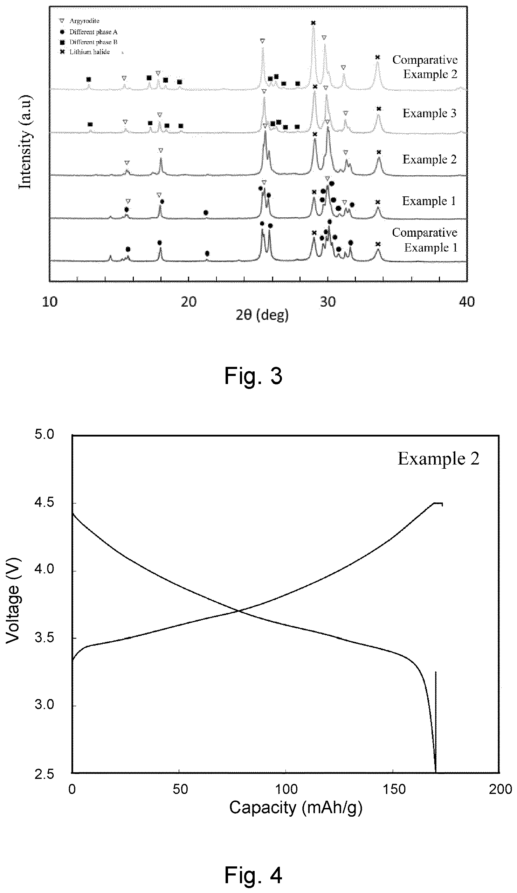

In a solid electrolyte containing an Li element, a P element, a S element, and a X element and having a crystalline phase with an argyrodite-type crystal structure, when the ratio of the S element is small (in other words, when the ratio of the X element is large), another crystalline phase (hereinafter, this crystalline phase is also referred to as a "different phase A") with lower lithium ion conductivity than that of the argyrodite crystalline phase is likely to be generated. The existence of the different phase A can be confirmed by XRD measurement of the solid electrolyte. When the different phase A exists in the solid electrolyte, a diffraction peak is observed at the position 2θ = 21.3°±0.3° in an XRD chart as shown in Fig. 3. In the argyrodite-type crystal structure, no diffraction peak is observed in the range of this angle. The inventor of the present invention performed high-temperature XRD measurements on the solid electrolyte with the different phase A, and surprisingly found that, as shown in Fig. 1, the argyrodite-type crystal structure is observed at about 160°C or higher, whereas the argyrodite-type crystal structure undergoes a phase transition to the different phase A in accordance with a decrease in the temperature. That is to say, the argyrodite-type crystal structure is a stable phase at about 160°C or higher, whereas the different phase A is a stable phase at a temperature less than about 160°C. Fig. 1 is a high-temperature XRD chart of Li₅PS₄ClBr, which is a solid electrolyte with a molar ratio X/P of 1.8 or more.

Based on the aforementioned findings, the inventor of the present invention conducted research in order to make the argyrodite-type crystal structure, which is a stable phase at about 160°C or higher, also a stable phase at room temperature, and found that, when the ratio of the S element is small (in other words, when the ratio of the X element is large) in a solid electrolyte containing the Li element, the P element, the S element, and the X element, substituting part of the P element with the M element is effective.

As described above, in the solid electrolyte of the present invention, since part of the P element is substituted with the M element, the ratio of the different phase A is small even when the ratio of the S element is reduced. The ratio of the different phase A can be evaluated using, as a measurement unit, the intensity of a diffraction peak attributed to the different phase A in an XRD pattern of the solid electrolyte. Specifically, the ratio of the different phase A is small to the extent that, when the intensity of the peak A observed at the position 2θ = 21.3°±0.3°, which is a diffraction peak attributed to the different phase A, is taken as Iₐ, and the background of the XRD pattern is taken as I₀, the ratio Iₐ/I₀ of the Iₐ to the I₀ is preferably 1.6 or less. Thus, the solid electrolyte of the present invention has high lithium ion conductivity. From the viewpoint of making this advantage more remarkable, the Iₐ/I₀ is more preferably 1.58 or less, and even more preferably 1.56 or less. The smaller the Iₐ/I₀ is, the more advantageous it is from the viewpoint of improving the lithium ion conductivity, and the ratio is ideally zero. Diffraction peaks attributed to the different phase A are observed at the positions 27.8±1.0° and 30.8±0.5°, in addition the above-mentioned position 21.3°±0.3°.

As described above, the substitution of part of the P element with the M element in the solid electrolyte of the present invention decreases the ratio of the different phase A. The inventor of the present invention conducted further research and found that a different phase B, which is a crystalline phase that is different from the different phase A is generated in accordance with an increase in the amount of M element substitution. Specifically, as shown in Fig. 2, the ratio of the different phase A decreases in accordance with an increase in the molar ratio M/P, but the ratio of the different phase B increases in accordance with an increase in the molar ratio M/P. The different phase B is a phase with lower lithium ion conductivity than the argyrodite-type crystal structure, as with the different phase A. Therefore, in the solid electrolyte of the present invention, it is advantageous to make the ratio of the different phase B small, as with the different phase A. The ratio of the different phase B can be evaluated using, as a measurement unit, the intensity of a diffraction peak attributed to the different phase B in an XRD pattern of the solid electrolyte. Specifically, the ratio of the different phase B is small to the extent that, when the intensity of the peak B observed at the position 2θ = 19.4°±0.3°, which is a diffraction peak attributed to the different phase B, is taken as I_{b}, and the background of the XRD pattern is taken as I₀, the ratio I_{b}/I₀ of the I_{b} to the I₀ is preferably 2.5 or less. Thus, the solid electrolyte of the present invention has high lithium ion conductivity. From the viewpoint of making this advantage more remarkable, the I_{b}/I₀ is more preferably 2.3 or less, and even more preferably 1.7 or less. The smaller the I_{b}/I₀ is, the more advantageous it is from the viewpoint of improving the lithium ion conductivity, and the ratio is ideally zero.

As described above, in the solid electrolyte of the present invention, it is advantageous to determine the degree of substitution of part of the P element with the M element by considering the ratios of the different phase A and the different phase B shown in Fig. 2. It is advantageous that the degree of substitution of part of the P element with the M element is such that the molar ratio M/P of the M element to the P element is 0 < M/P < 1, in order to enhance the lithium ion conductivity of the solid electrolyte. From the viewpoint of making this advantage more remarkable, the molar ratio M/P is preferably from 0.02 to 0.80 inclusive, more preferably from 0.06 to 0.60 inclusive, and even more preferably from 0.08 to 0.30 inclusive.

If the solid electrolyte of the present invention contains two or more types of M elements, the number of moles M in the above-mentioned molar ratio M/P means the total number of moles of all M elements.

In the solid electrolyte of the present invention, the ratio of the S element to all constituent elements is preferably small from the viewpoint of reducing the reaction between the S element and moisture and suppressing the generation of hydrogen sulfide. In the case of a solid electrolyte having a crystalline phase with an argyrodite-type crystal structure, it is appropriate to evaluate the ratio of the S using, as a measurement unit, the molar ratio of the S element to the P element, that is, S/P. In the present invention, part of the P element is substituted with the M element as described above, and thus the molar ratio S/P is represented by S/(P+M). It is appropriate to evaluate the ratio of the S element based on the molar ratio S/(P+M) of the S element to the total of the P element and the M element in the solid electrolyte of the present invention in this manner. In the present invention, it is advantageous that the molar ratio S/(P+M) satisfies 3.5 < S/(P+M) < 4.2, from the viewpoint of reducing the reaction between the S element and moisture. From the viewpoint of making this advantage more remarkable, the molar ratio S/(P+M) is preferably from 3.60 to 4.15 inclusive, more preferably from 3.70 to 4.10 inclusive, and even more preferably from 3.80 to 4.05 inclusive.

In relation to the molar ratio S/(P+M) described above, it is advantageous that the ratio of the S element to all elements constituting the solid electrolyte of the present invention is 40 mol% or less, from the viewpoint of reducing the reaction between the S element and moisture. From the viewpoint of making this advantage more remarkable, the ratio of the S element is preferably 38 mol% or less, and more preferably 35 mol% or less. Furthermore, the ratio of the S element is preferably 20 mol% or more, more preferably 25 mol% or more, and even more preferably 30 mol% or more, from the viewpoint of enhancing the lithium ion conductivity of the solid electrolyte.

In the solid electrolyte of the present invention, it is desirable to properly adjust the X/P, which is the molar ratio of the X element to the P element, in order to improve the lithium ion conductivity of the solid electrolyte. In the present invention, part of the P element is substituted with the M element as described above, and thus the molar ratio X/P is represented by X/(P+M). It is appropriate to adjust the molar ratio X/(P+M) of the X element to the total of the P element and the M element in the solid electrolyte of the present invention in this manner. From this point of view, it is advantageous that the molar ratio X/(P+M) satisfies 0.7 < X/(P+M) < 3.0, from the viewpoint of enhancing the lithium ion conductivity of the solid electrolyte. From the viewpoint of making this advantage more remarkable, the molar ratio X/(P+M) is preferably from 1.0 to 2.8 inclusive, more preferably from 1.5 to 2.4 inclusive, and even more preferably from 1.8 to 2.2 inclusive.

The amount of each element constituting the solid electrolyte, such as the S element, can be measured through ICP emission spectral analysis, for example. The above-described molar ratios M/P, S/(P+M), and X/(P+M) can be calculated from the results based on the amounts of elements measured.

In consideration of the above-described molar ratios M/P, S/(P+M), and X/(P+M), the solid electrolyte of the present invention preferably has the composition represented by Li_{w}P₁₋ₓMₓS_{y}X_{z}, from the viewpoint of enhancing the lithium ion conductivity of the solid electrolyte.

In the formula, w is a number of preferably from 4.5 to 5.5 inclusive, more preferably from 4.7 to 5.3 inclusive, and even more preferably from 4.9 to 5.1 inclusive.

Also, x is a number of preferably from 0.05 to 0.45 inclusive, more preferably from 0.08 to 0.30 inclusive, and even more preferably from 0.09 to 0.20 inclusive.

Also, y is a number of preferably from 3.5 to 4.2 inclusive, more preferably from 3.6 to 4.15 inclusive, and even more preferably from 3.70 to 4.10 inclusive.

Also, z is a number of preferably more than 1.0 and 3.0 or less, more preferably from 1.5 to 2.6 inclusive, and even more preferably from 1.8 to 2.2 inclusive.

In the solid electrolyte of the present invention, examples of the X element include a fluorine (F) element, a chlorine (Cl) element, a bromine (Br) element, and an iodine (I) element. As the X element, these elements may be used alone or in a combination of two or more. From the viewpoint of facilitating the formation of an argyrodite-type crystal structure through a solid phase reaction and enhancing the lithium ion conductivity, the solid electrolyte contains, as the X element, preferably at least a Br element, and more preferably a Br element and a Cl element.

If the solid electrolyte contains a Br element and a Cl element as the X element, the ratio of the Br element to the total of the number of moles of the Br element and the number of moles of the Cl element, that is, Br/(Br+CI) is set to preferably 0.2 to 0.8 inclusive, more preferably 0.3 to 0.7 inclusive, and even more preferably 0.4 to 0.6 inclusive.

The introduction of Br facilitates the formation of an argyrodite-type crystal structure, but appears to reduce the solid solubility of halogen to the argyrodite-type crystal structure because Br has a larger ionic radius than that of Cl and S. Therefore, if Br/(Br+CI) is properly adjusted as described above, the formation of an argyrodite-type crystal structure can be facilitated, and more halogen elements can be dissolved in the argyrodite-type crystal structure. As a result, the lithium ion conductivity of the solid electrolyte can be further enhanced. An increase in the solid solubility of halogen in the argyrodite-type crystal structure corresponds to a decrease in the occupancy of lithium sites in the crystal structure. This is thought to improve the lithium ion conductivity.

The solid electrolyte of the present invention has lithium ion conductivity in a solid state. The solid electrolyte of the present invention has lithium ion conductivity of preferably 0.5 mS/cm or more, more preferably 1.0 mS/cm or more, and even more preferably 1.5 mS/cm or more, at room temperature, that is, at 25°C, for example. The lithium ion conductivity can be measured using a method described in "Examples", which will be described later.

Next, a suitable method for producing the solid electrolyte of the present invention will be described. A solid electrolyte can be synthesized through a solid phase reaction in which a raw material composition is heated and sintered. The raw material composition is a mixture of raw materials containing elements constituting the solid electrolyte, and specifically refers to a compound containing an Li element, a compound containing a S element, a compound containing a P element, a compound containing a X element, and a compound containing an M element.

The compound containing an Li element may be a lithium compound such as lithium sulfide (Li₂S), lithium oxide (Li₂O), or lithium carbonate (Li₂CO₃), or lithium metal as a simple substance, for example.

The compound containing a S element may be a phosphorus sulfide such as phosphorus trisulfide (P₂S₃) or phosphorus pentasulfide (P₂S₅), for example. Alternatively, the compound containing a sulfur (S) element may be sulfur (S) as a simple substance, for example.

The compound containing a P element may be a phosphorus sulfide such as phosphorus trisulfide (P₂S₃) or phosphorus pentasulfide (P₂S₅), a phosphorus compound such as sodium phosphate (Na₃PO₄), or phosphorus as a simple substance, for example.

The compound containing a X element may be a compound of one or at least two elements selected from the group consisting of a F element, a Cl element, a Br element, and an I element and one or at least two elements selected from the group consisting of a sodium (Na) element, a lithium (Li) element, a boron (B) element, an aluminum (Al) element, a silicon (Si) element, a phosphorus (P) element, a sulfur (S) element, a germanium (Ge) element, an arsenic (As) element, a selenium (Se) element, a tin (Sn) element, an antimony (Sb) element, a tellurium (Te) element, a lead (Pb) element, and a bismuth (Bi) element, or a compound in which oxygen or sulfur is further bonded to the compound. Specific examples thereof include lithium halides such as LiF, LiCI, LiBr, and Lil, phosphorus halides such as PFs, PF₅, PCl₃, PCl₅, POCl₃, PBrs, POBr₃, PI₃, P₂Cl₄, and P₂I₄, sulfur halides such as SF₂, SF₄, SF₆, S₂F₁₀, SCl₂, S₂Cl₂, and S₂Br₂, sodium halides such as Nal, NaF, NaCl, and NaBr, and boron halides such as BCl₃, BBr₃, and BI₃. These compounds may be used alone or in a combination of two or more. Of these compounds, it is preferable to use lithium halides (LiX (X represents a halogen)).

The compound containing an M element may be a sulfide of the M element. If the M element is silicon, for example, the compound may be SiS₂ or the like. If the M element is antimony, for example, the compound may be Sb₂S₃, Sb₂S₅ or the like. If the M element is tin, for example, the compound may be SnS₂ or the like.

The above-mentioned raw materials are mixed to prepare a raw material composition. The mixing may be performed using an attritor, a paint shaker, a planetary ball mill, a ball mill, a bead mill, a homogenizer, or the like, for example. The amount of each raw material added when mixing is adjusted as appropriate to meet the desired composition of the solid electrolyte.

The resulting raw material composition is fired to cause a solid phase reaction to occur, and thus a fired product having a crystalline phase with an argyrodite-type crystal structure is obtained. The firing atmosphere may be an inert gas atmosphere such as an argon or nitrogen atmosphere, or a hydrogen sulfide atmosphere, for example. From the viewpoint of reducing the ratio of sulfur elements contained in the solid electrolyte, it is preferable to use an inert gas atmosphere.

The firing temperature is preferably 200°C or higher, more preferably 300°C or higher, even more preferably 350°C or higher, and even more preferably 400°C or higher, for example, from the viewpoint of ensuring the solid phase reaction of the raw material composition. Meanwhile, considering industrial feasibility and economic efficiency, the firing temperature is preferably 700°C or lower, more preferably 600°C or lower, and even more preferably 550°C or lower, for example.

The firing time is not critical, and is not particularly limited as long as a desired fired product of the composition can be obtained. Specifically, the firing time is preferably sufficient to cause a solid phase reaction of the raw material composition to sufficiently occur. The firing time may be 30 minutes or longer, 2 hours or longer, or 3 hours or longer, for example. Meanwhile, the firing time may be 10 hours or shorter, or 5 hours or shorter, for example.

After the firing, the fired product may be crushed and milled as necessary, and further classified as necessary. For example, it is preferable to use a planetary ball mill, a vibration mill, a rolling mill, or other milling or kneading machines to mill or crush the fired product.

The thus obtained solid electrolyte may be used alone or in combination with another solid electrolyte. The solid electrolyte has a D₅₀ of from 0.1 µm to 150 µm inclusive according to a volume-based particle size distribution as measured using a laser diffraction scattering particle size distribution measurement method. If the solid electrolyte has a D₅₀ of 0.1 µm or more, an excessive increase in the surface area of the solid electrolyte can be suppressed, an increase in the resistance can be suppressed, and mixing with the active material can be facilitated. On the other hand, if the solid electrolyte has a D₅₀ of 150 µm or less, for example, the contact area increases when mixed with the active material, and the lithium ion transfer resistance between the active material and the solid electrolyte can be reduced. From this point of view, the solid electrolyte has a D₅₀ of preferably 0.3 µm or more, and more preferably 0.5 µm or more, for example. Meanwhile, the solid electrolyte has a D₅₀ of preferably 250 µm or less, more preferably 70 µm or less, and even more preferably 50 µm or less, for example.

The solid electrolyte of the present invention can be used as a material that constitutes a solid electrolyte layer, a positive electrode layer, or a negative electrode layer. Specifically, the solid electrolyte of the present invention can be used in a battery that has a positive electrode layer, a negative electrode layer, and a solid electrolyte layer located between the positive electrode layer and the negative electrode layer. That is to say, the solid electrolyte can be used in a so-called solid-state battery. More specifically, the solid electrolyte can be used in a lithium solid-state battery. The lithium solid-state battery may be a primary battery or a secondary battery. There is no particular limitation on the shape of the battery, and, for example, the shapes of laminate-type batteries, cylindrical batteries, rectangular batteries, and the like may be adopted. The term "solid-state battery" encompasses, in addition to a solid-state battery that does not contain any liquid substance or gel substance as the electrolyte, a battery that contains a liquid substance or a gel substance as the electrolyte in an amount of, for example, 50 mass% or less, 30 mass% or less, or 10 mass% or less.

In the case where the solid electrolyte of the present invention is contained in a solid electrolyte layer, the solid electrolyte layer can be produced by, for example, forming a coating film on a substrate using, for example, a method in which a slurry constituted by the solid electrolyte, a binder, and a solvent is dripped onto the substrate and leveled off with a doctor blade or the like, a method in which the substrate and the slurry are brought into contact with each other, followed by cutting with an air knife, or a screen printing method, and then removing the solvent from the coating film through heat drying. Alternatively, the solid electrolyte layer can also be produced by forming the solid electrolyte in powder form into a green compact by pressing or the like, and then appropriately processing the green compact.

Typically, the thickness of the solid electrolyte layer is preferably from 5 to 300 µm inclusive, and more preferably from 10 to 100 µm inclusive, from the viewpoint of the balance between the short circuit prevention and the volumetric capacity density.

The solid electrolyte of the present invention is used in combination with an active material and constitutes an electrode material mixture. The ratio of the solid electrolyte in the electrode material mixture is typically from 10 to 50 mass% inclusive. The electrode material mixture may also contain other materials such as a conductivity aid and a binder when necessary. A positive electrode layer and a negative electrode layer can be formed by mixing the electrode material mixture and a solvent to prepare a paste, applying the paste onto a current collector such as aluminum foil, and drying the applied paste.

As a positive electrode material constituting the positive electrode layer, positive electrode materials that are used as positive electrode active materials for lithium ion batteries can be used as appropriate. Examples of the positive electrode material include positive electrode active materials containing lithium, or more specifically, a spinel-type lithium transition metal oxide, a lithium metal oxide having a layered structure, and the like. The energy density can be increased by using a high-voltage positive electrode material as the positive electrode material. In addition to the positive electrode active material, the positive electrode material may contain a conductive material, or may contain other materials.

As a negative electrode material constituting the negative electrode layer, negative electrode materials that are used as negative electrode active materials for lithium ion batteries can be used as appropriate. The solid electrolyte of the present invention is electrochemically stable, and therefore, lithium metal or carbon-based materials such as graphite, artificial graphite, natural graphite, and non-graphitizable carbon (hard carbon), which are materials that allow charge and discharge to be performed at a low potential (about 0.1 V vs Li⁺/Li) comparable to that of lithium metal, can be used as the negative electrode material. The energy density of the solid-state battery can be significantly increased in this manner. Furthermore, silicon or tin, which are promising as high-capacity materials, can also be used as the active material. In a battery that uses a common electrolytic solution, as the battery is charged and discharged, the electrolytic solution reacts with an active material, causing corrosion on the surface of the active material, and thus, the battery characteristics markedly deteriorate. By contrast, in a battery in which the solid electrolyte of the present invention is used instead of the electrolytic solution, and silicon or tin is used as the negative electrode active material, the above-described corrosion reaction does not occur, and the durability of the battery can be improved accordingly. The negative electrode material may also contain a conductive material, or may contain other materials, in addition to the negative electrode active material.

The solid electrolyte containing an Li element, a P element, a S element, a X element, and an M element (M represents at least one of Si, Sn, Sb, Ge, and B), wherein the molar ratio S/(P+M) of the S element to the total of the P element and the M element satisfies 3.5 < S/(P+M) < 4.2, and the molar ratio M/P of the M element to the P element satisfies 0 < M/P < 1, may be a solid electrolyte represented by Li_{9.54}Si_{1.74}P_{1.44}S_{11.7}Cl_{0.3}, for example. This solid electrolyte has an LGPS-type crystal structure, as described in Kato, Y. et al. High-power all-solid-state batteries using sulfide superionic conductor. Nat. Ener. 1, 1630 (2016). Furthermore, this solid electrolyte is reported to have poor low potential stability, and Li₅Ti₅O₁₂ with an operating potential of about 1.5 V (vs Li) is used for the negative electrode layer of all-solid-state batteries using this solid electrolyte. On the other hand, since the solid electrolyte of the present invention has an argyrodite-type crystal structure, reversible charge and discharge are possible even when a negative electrode active material such as graphite, which operates at 0 to 0.5 (vs Li), is used. This is also evident from Fig. 4, which will be described later.

### Examples

Hereinafter, the present invention will be described in greater detail using examples. However, the scope of the present invention is not limited to the examples below.

### Example 1

### (1) Preparation of Raw Material Composition

A lithium sulfide (Li₂S) powder, a phosphorus pentasulfide (P₂S₅) powder, a lithium chloride (LiCI) powder, a lithium bromide (LiBr) powder, and a silicon sulfide (SiS₂) powder were weighed to a total of 5 g so as to obtain the composition shown in Table 1 below. Then, 10 g of heptane was added to these powders to prepare a slurry. This slurry was placed in a zirconia container with a capacity of 80 mL and set in a planetary ball mill apparatus (P-5 manufactured by Fritsch). ZrO₂ balls with a diameter of 5 mm were used as the milling media. The ball mill apparatus was operated at 100 rpm for 10 hours, with 15-minute pauses every hour. Solvents were removed from the resulting slurry through vacuum drying at room temperature. The raw material composition was thus obtained.

### (2) Firing

The raw material composition was fired to obtain a fired product. The firing was performed using a tube electric furnace. During the firing, 100% pure nitrogen gas was circulated in the electric furnace. The firing temperature was set to 600°C, and firing was performed for 4 hours.

### (4) Fine Milling

The fired product was crushed in a mortar and passed through a 250 µm sieve to obtain a pulverized powder. The powder was finely milled using a planetary ball mill apparatus. ZrO₂ balls with a diameter of 5 mm were used as the milling media. Heptane was used as the solvent. The ball mill apparatus was operated at 100 rpm for 3 hours. The solvent was removed from the resulting slurry through vacuum drying at room temperature. The desired solid electrolyte powder was thus obtained.

### Examples 2 and 3

A lithium sulfide powder, a phosphorus pentasulfide powder, a lithium chloride powder, a lithium bromide powder, and a silicon sulfide powder were used so as to obtain the compositions shown in Table 1 below. Solid electrolyte powders were obtained in the same way to that of Example 1 except for this aspect.

### Comparative Example 1

This comparative example is an example in which the M element was not used to produce the solid electrolyte. A lithium sulfide powder, a phosphorus pentasulfide powder, a lithium chloride powder, and a lithium bromide powder were used so as to obtain the composition shown in Table 1 below. A solid electrolyte powder was obtained in the same way to that of Example 2 except for this aspect.

### Comparative Example 2

This comparative example is an example in which an excess amount of the M element was used to produce the solid electrolyte. A lithium sulfide powder, a phosphorus pentasulfide powder, a lithium chloride powder, a lithium bromide powder, and a silicon sulfide powder were used so as to obtain the composition shown in Table 1 below. A solid electrolyte powder was obtained in the same way to that of Example 2 except for this aspect.

### Evaluation 1

The solid electrolytes obtained in the examples and the comparative examples were subjected to XRD measurement to obtain the values of Iₐ/I₀ and I_{b}/I₀. Table 1 shows the results. Fig. 3 is an X-ray diffraction chart of the solid electrolytes obtained in Examples 1 to 3 and Comparative Examples 1 and 2.

The XRD measurement was performed using an X-ray diffractometer "Smart Lab SE" manufactured by Rigaku Corporation. The measurement conditions were as follows: no atmospheric exposure; scan axis: 2θ/θ; scan range: from 10° to 120°; step width: 0.02°; and scan speed: 1°/min. CuKα1 radiation was used as the X-ray source. The tube voltage was set to 40 kV, and the tube current was set to 80 mA.

The specific measurement methods for the values of Iₐ/I₀ and I_{b}/I₀ were as follows. An airtight holder for ASCs (A00012149) manufactured by Rigaku Corporation was used for the cells not exposed to the atmosphere. The airtight cover was a transparent hermetic film and the atmosphere was Ar.
The average value of the counts at 2θ = 20.5±0.3° was taken as a background intensity I₀. The largest value of the counts at 2θ = 21.3±0.3° was taken as Iₐ. The largest value of the counts at 2θ = 19.4±0.3° was taken as I_{b}. This measurement was performed under the condition that I₀ was between 250 and 450 counts and that the peak of argyrodite observed in the range of 2θ = 30±1.0° was 2000 counts or more.

### Evaluation 2

The lithium ion conductivities of the solid electrolytes obtained in the examples and the comparative examples were measured using the following method.

Each solid electrolyte was uniaxially pressed under an applied load of about 6 t/cm² in a glove box purged with a sufficiently dried argon gas (with a dew point of -60°C or lower), to thereby produce a sample for lithium ion conductivity measurement constituted by a pellet with a diameter of 10 mm and a thickness of about 1 to 8 mm. The lithium ion conductivity measurement was performed using a Solartron 1255B manufactured by Toyo Corporation. The measurement conditions were as follows. An AC impedance method was performed at a temperature of 25°C, a frequency of 100 Hz to 1 MHz, and an amplitude of 100 mV.

### Evaluation 3

A solid-state battery using the solid electrolyte obtained in Example 2 for a negative electrode layer was prepared, and the charge-discharge behavior of the solid-state battery was checked using the following method.

### Materials

A layered compound LiNi_{0.6}Co_{0.2}Mn_{0.2}O₂ (NCM) powder with a coating layer constituted by Li-Nb-O was used as the positive electrode active material. Graphite was used as the negative electrode active material. An argyrodite-type sulfide solid electrolyte that is commonly used as a solid electrolyte was used as the positive electrode layer and the separator layer. The solid electrolyte obtained in Example 2 was used as the negative electrode layer.

### Preparation of Positive Electrode Material Mixture and Negative Electrode Material Mixture

The positive electrode material mixture was prepared by mixing powders of the positive electrode active material, the solid electrolyte, and a conductivity aid (acetylene black) in a mass ratio of 60:37:3 in a mortar.

The negative electrode material mixture was prepared by mixing graphite and the solid electrolyte in a mass ratio of 64:36 in a mortar.

### Production of Solid-State Battery Cell

First, 0.05 g of a solid electrolyte was poured into a ceramic cylinder (with an opening diameter of 10.5 mm and a height of 18 mm) that was open at the top and bottom in a state in which the bottom opening was closed with an electrode made of SUS. An electrode was attached to the top opening and uniaxially pressed at about 0.8 tf/cm² to form a solid electrolyte layer. The upper electrode was temporarily removed, the positive electrode material mixture was poured over the solid electrolyte layer and smoothed flat, and then the upper electrode was reattached. The lower electrode was temporarily removed, and the negative electrode material mixture was poured over the solid electrolyte layer. The lower electrode was reattached and uniaxially pressed at about 4.6 tf/cm². Subsequently, the upper electrode and the lower electrode were clamped at a torque pressure of 4 N·m to produce an all-solid-state battery equivalent to 1 mAh. The all-solid-state battery was produced in a glove box purged with dry air with an average dew point of -70°C.

The thus obtained all-solid-state battery was placed in an environmental test chamber kept at 25°C, and connected to a charge-discharge measurement device to evaluate battery characteristics.

The battery was charged and discharged with 1 mA as 1 C. First, the battery was charged using the CC-CV method at 0.2 C to 4.5 V to obtain the charge capacity. The battery was discharged using the CC method at 0.2 C to 2.5 V to obtain the discharge capacity. When the solid electrolyte obtained in Example 2 was used for the negative electrode layer, the charge-discharge efficiency (discharge capacity ÷ charge capacity × 100%) was 98.2% in the second cycle and 98.6% in the third cycle, that is, it was confirmed that the charge-discharge behavior was reversible. Fig. 4 shows a charge-discharge behavior of this all-solid-state battery in the second cycle.

**Table 1**

| | Composi tion | S/ (P+M) | M/P | X/ (P+M) | Iₐ/Iₒ | I_{b}/Iₒ | Sulfur element ratio (mol%) | Lithium ion conductivi ty (mS/cm) |
|---|---|---|---|---|---|---|---|---|
| Ex. 1 | Li_{5.1}P_{0.9} Si_{0.1}S₄ ClBr | 4 | 0.11 | 2 | 1.56 | 1.15 | 33.0 | 1.60 |
| Ex. 2 | Li_{5.15}P_{0.85} Si_{0.15}S₄ ClBr | 4 | 0.18 | 2 | 1.46 | 1.35 | 32.9 | 1.50 |
| Ex. 3 | Li_{5.35}P_{0.65} Si_{0.35}S₄ ClBr | 4 | 0.54 | 2 | 1.20 | 2.28 | 32.4 | 0.70 |
| Com. Ex. 1 | Li₅PS₄ ClBr | 4 | 0 | 2 | 1.70 | 1.08 | 33.3 | 0.43 |
| Com. Ex. 2 | Li_{5.5}P_{0.5} Si_{0.5}S₄ ClBr | 4 | 1 | 2 | 1.13 | 2.68 | 32.0 | 0.31 |

As can be clearly seen from the results shown in Table 1, the solid electrolytes obtained in the examples have higher lithium ion conductivities than those of the solid electrolytes of the comparative examples although their sulfur element ratios are almost the same as those of the solid electrolytes of the comparative examples.

### Industrial Applicability

The present invention provides a solid electrolyte with a predetermined composition and high ion conductivity.

## Claims

1. A solid electrolyte comprising a lithium (Li) element, a phosphorus (P) element, a sulfur (S) element, a halogen (X) element, and an M element (M represents at least one of silicon (Si), tin (Sn), antimony (Sb), germanium (Ge), and boron (B)),
wherein a molar ratio S/(P+M) of the sulfur (S) element to a total of the phosphorus (P) element and the M element satisfies 3.5 < S/(P+M) < 4.2,
a molar ratio M/P of the M element to the phosphorus (P) element satisfies 0 < M/P < 1, and
the solid electrolyte has a crystalline phase with an argyrodite-type crystal structure.

2. The solid electrolyte according to claim 1, wherein, a ratio Iₐ/I₀ of Iₐ to I₀ is 1.6 or less,
wherein Iₐ represents an intensity of a peak A observed at a position 2θ = 21.3°±0.3° in an X-ray diffraction pattern measured by an X-ray diffractometer (XRD) using CuKα1 radiation, and
I₀ represents a background of the X-ray diffraction pattern.

3. The solid electrolyte according to claim 1 or 2, wherein, a ratio I_{b}/I₀ of I_{b} to I₀ is 2.5 or less,
wherein I_{b} represents an intensity of a peak B observed at a position 2θ = 19.4°±0.3° in an X-ray diffraction pattern measured by an X-ray diffractometer (XRD) using CuKα1 radiation, and
I₀ represents a background of the X-ray diffraction pattern.

4. The solid electrolyte according to any one of claims 1 to 3, wherein a molar ratio X/(P+M) of the halogen (X) element to a total of the phosphorus (P) element and the M element satisfies 0.7 < X/(P+M) < 3.0.

5. The solid electrolyte according to any one of claims 1 to 4, wherein the solid electrolyte has a composition represented by Li_{w}P₁₋ₓMₓS_{y}X_{z}
wherein w represents a number of 4.5 to 5.5,
x represents a number of 0.05 to 0.45,
y represents a number of 3.5 to 4.2, and
z represents a number of more than 1.0 and 3.0 or less.

6. The solid electrolyte according to any one of claims 1 to 5, wherein the halogen (X) element includes a bromine (Br) element.

7. The solid electrolyte according to any one of claims 1 to 6, wherein the halogen (X) includes a bromine (Br) element and a chlorine (Cl) element.

8. The solid electrolyte according to any one of claims 1 to 7, wherein a proportion of the sulfur (S) element to all elements is 40 mol% or less.

9. An electrode material mixture comprising the solid electrolyte according to any one of claims 1 to 8 and an active material.

10. A solid electrolyte layer comprising the solid electrolyte according to any one of claims 1 to 8.

11. A battery comprising a positive electrode layer, a negative electrode layer, and a solid electrolyte layer between the positive electrode layer and the negative electrode layer, wherein the battery contains the solid electrolyte according to any one of claims 1 to 8.
